# FASCICULE DE BREVET EUROPEEN

(11) **EP 1 952 054 B1**
(45) Date de publication et mention de la délivrance du brevet: **11.05.2011**
(21) Numéro de dépôt: 06820285.2
(22) Date de dépôt: 27.10.2006
(51) Int. Cl.: F17C 13/02, F17C 13/12

(54) **DISPOSITIF ET PROCEDE DE PROTECTION D'UN RESERVOIR CRYOGENIQUE ET RESERVOIR COMPORTANT UN TEL DISPOSITIF**
VORRICHTUNG UND VERFAHREN ZUM SCHUTZ EINES KRYOGENEN BEHÄLTERS UND SOLCH EINE VORRICHTUNG UMFASSENDER BEHÄLTER
DEVICE AND METHOD FOR PROTECTING A CRYOGENIC TANK AND TANK COMPRISING SUCH A DEVICE

(30) Priorité: 18.11.2005 FR 0553498
(43) Date de publication de la demande: 06.08.2008
(73) Titulaire: L'AIR LIQUIDE, Société Anonyme pour l'Etude et l'Exploitation des Procédés Georges Claude, 75007 Paris (FR)
(72) Inventeur: BARTHELEMY, Hervé, F-77144 Montevrain (FR); ALLIDIERES, Laurent, F-38410 Saint Martin d'Uriage (FR)
(74) Mandataire: De Cuenca, Emmanuel Jaime
(86) Numéro de dépôt international: PCT/FR2006/051023
(87) Numéro de publication internationale: WO 2007/057581

(56) Documents cités:
- EP-A- 0 781 958
- EP-A- 1 357 328
- DE-A1- 1 948 022
- DE-A1- 4 417 624
- DE-A1- 10 113 725
- FR-A- 2 535 831
- US-A- 4 404 843

## Description

La présente invention concerne un procédé de protection d'un réservoir cryogénique, un dispositif protection d'un réservoir cryogénique et un réservoir comportant un tel dispositif.

L'invention concerne plus particulièrement la protection d'un réservoir cryogénique comportant deux enveloppes concentriques délimitant entre elles un espace inter-paroi dans lequel règne une pression dite basse.

Les réservoirs cryogéniques sont constitués en général de deux enveloppes métalliques concentriques séparées l'une de l'autre par une vide inter-paroi. L'espace inter-paroi sous vide est prévu pour isoler thermiquement le réservoir interne contenant le fluide cryogénique froid de la température extérieure au réservoir qui est plus chaude. La pression de travail au sein de l'espace inter-paroi est en générale de l'ordre de 10⁻⁵ mbar.

Une isolation appelée isolation multicouche est en général installée dans cet espace inter-paroi pour optimiser l'isolation, en particulier en ce qui concerne les transferts thermiques par rayonnement. Cette isolation multicouche comprend classiquement plusieurs couches intercalaires constituées de matériaux successivement réfléchissants et isolants.

Pour les fluides cryogéniques dont la température est inférieure à la température de liquéfaction de l'air (en particulier l'hydrogène et l'hélium), de l'air liquéfié (mélange contenant environ 50% masse d'Oxygène liquide et 50% d'Azote Liquide) peut venir se former sur la paroi froide du réservoir intérieur en cas de rupture du vide inter-paroi. En cas de choc consécutif à cette rupture, l'isolation multicouche peut s'enflammer car elle est en contact direct avec une atmosphère enrichie en oxygène. Une telle inflammation peut avoir des conséquences graves sur l'intégrité du réservoir.

Suite à des accidents, une norme européenne (EN1797) a défini les exigences liées à l'utilisation d'une isolation multicouche sur des récipients cryogéniques. Cette norme précise en particulier les compatibilités des couches isolantes avec une atmosphère enrichie en oxygène. La norme prévoit que les isolations ne doivent pas prendre feu en cas de choc (énergie du choc égale à 100 Joules) dans une atmosphère de liquide cryogénique composée pour moitié d' azote et pour moitié d' oxygène (proportions exprimées en masse).

Les isolants comportant des feuilles réfléchissantes en matériaux polymère aluminisés (du type Mylar ®) nie sont pas utilisables car les polymères en question ne sont pas compatibles vis-à-vis de l'oxygène en raison de la réglementation qui s'appuie sur la norme EN1797.

Les isolants multicouche acceptés sont du type comportant une couche d'aluminium par exemple de 12n à 15µm et du papier de verre intercalaire d'épaisseur par exemple de 89µm. Ces combinaisons multicouches sont employées avec satisfaction dans l'industrie pour isoler de gros conteneurs (typiquement des conteneurs de plusieurs milliers de litres d'hydrogène liquide).

Les réservoirs d'hydrogène liquide embarqués pour des applications automobiles ont des capacités plues réduites (typiquement entre 60 et 200 litres). Ces réservoirs comportent en général de nombreuses tuyauteries d'entrée et de sortie du réservoir pour assurer notamment : les remplissages de liquide, les soutirages de liquide, les soutirages de gaz, et le passage de sondes de niveau.

Chaque piquage dans le réservoir crée une discontinuité dans la surface isolée qui nuit à la bonne isolation du réservoir. En effet, dans une isolation comprenant des couches conductrices (aluminium par exemple), si ces couches entrent en contact l'une contre l'autre ou avec un tube, elles perdent au moins une partie de leurs propriétés d'écran thermique vis-à-vis du rayonnement entrant sur l'enveloppe interne. La conception de ces réservoirs est faite de manière à limiter le nombre de ces discontinuités et il est communément admis qu'une seule discontinuité dans l'isolation non traitée avec soin lors du processus de fabrication engendre des pertes thermiques de l'ordre de 0.5 Watt, ce qui représente environ le tiers de la perte thermique nominale du réservoir.

Quel que soit le soin apporté, il est donc très diffïcile d'isoler ces réservoirs avec une multicouche conducteur/papier de verre de façon satisfaisante car la moindre négligence lors du processus de fabrication dégrade de manière importante les performances thermique du réservoir.

Les documents US 4,404,843 ou DE 44 17 624 décrivent des systèmes de détection de fuites pour réservoir à double enveloppes dans lesquels une surpression ou une dépression est maintenue dans l'espace inter-paroi avec un gaz inerte. Le système détecte une fuite via un capteur de gaz ou via une anomalie dans la pression mesurée.

Un but de la présente invention est de pallier tout ou une partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce qu'il comporte :
- une étape de détection d'un choc au niveau du réservoir et/ou d'une variation de pression au sein de l'espace inter-paroi, et en cas de détection d'un choc au niveau du réservoir ayant une intensité déterminée et/ou d'une variation de pression déterminée au niveau de l'espace inter-paroi,
- une étape de génération d'un flux de gaz inerte au sein de l'espace inter-paroi.

Un autre but de l'invention est de proposer un dispositif protection d'un réservoir cryogénique.

Selon une particularité de l'invention, le dispositif protection d'un réservoir cryogénique comprend des moyens de détection d'un choc et/ou d'une variation de pression, des moyens d'inertage aptes à délivrer un flux de gaz inerte, des moyens de libération coopérant avec les moyens de détection et les moyens d'inertage pour commander la délivrance d'un flux de gaz inerte par les moyens d'inertage lorsque les moyens de détection détectent un choc d'une intensité déterminée et/ou d'une variation de pression déterminée.

Selon une particularité avantageuse, les moyens de détection sont aptes à détecter un choc thermique pour commander la délivrance d'un flux de gaz inerte par les moyens d'inertage lors d'un choc thermique d'une intensité déterminée.

Un autre but de l'invention est de proposer un réservoir cryogénique comportant un tel dispositif de protection**.**

A cette fin le reservoir cryogénique selon l'invention est défini selon la revendication 2.

Par ailleurs, l'invention peut comporter l'une ou plusieurs des caractéristiques suivantes :
- les moyens d'inertage comprennent une réserve de gaz inerte sous pression,
- les moyens de libération comportent un système de type fusible ou amovible apte libérer un passage entre les moyens d'inertage et l'espace inter-paroi,
- le dispositif de protection comporte un boîtier monté sur l'enveloppe extérieure et communicant avec l'espace inter-paroi, une barrière fusible empêchant un flux de gaz inerte entre les moyens d'inertage et l'espace inter-paroi, les moyens de libération comportant un percuteur soumis d'une part à la pression dans l'espace inter-paroi et, d'autre part, à l'action de moyens de rappel, le percuteur étant apte à se déplacer relativement au boîtier entre une position inactive vis à vis de la barrière fusible et une position active provoquant la rupture de la barrière fusible,
- le réservoir comporte des moyens formant soupape de sécurité vers l'atmosphère prévus pour évacuer vers l'atmosphère une partie du flux de gaz inerte délivré par les moyens d'inertage dans le cas d'une surpression déterminée,
- le réservoir a une capacité inférieure à deux mille litres et de préférence inférieure à 500 litres,
- les moyens d'inertage comprennent de l'hélium pour permettre la détection d'une éventuelle fuite.

D'autres particularités et avantages apparaîtront à la lecture de la description ci-après.

Le réservoir cryogénique d'un exemple de réalisation de l'invention comporte une première enveloppe intérieure destinée à contenir un fluide ou un mélange de fluides, par exemple un mélange d'hydrogène liquide et gazeux. Le réservoir comporte une seconde enveloppe extérieure. L'enveloppe extérieure est disposée de façon concentrique autour de l'enveloppe intérieure. Les deux enveloppes délimitent entre elles un espace inter-paroi dans lequel règne une pression de travail dite basse (une pression par exemple inférieure à 10⁻³ mbar).

Classiquement, l'espace inter-paroi contient des moyens formant support du réservoir intérieur.

L'espace inter-paroi contient par ailleurs des moyens d'isolation, tels qu'une multicouche conductrice ou non. Par exemple, les moyens d'isolation comprennent une multicouche comportant une combinaison de polyéthylène téréphtalique aluminisé et de papier de verre.

Classiquement, le réservoir comprend également, débouchant dans l'enveloppe intérieure : un tube de remplissage,un tube de soutirage de gaz et un tube de réchauffage du liquide afin de maintenir en pression le réservoir lors du soutirage du gaz par la tubulure.

Selon une caractéristique avantageuse de l'invention, le réservoir comporte un dispositif de protection permettant une purge par gaz inerte de l'espace inter-paroi.

Le dispositif de protection selon un exemple de réalisation de l'invention comporte un boîtier ou collecteur monté sur le réservoir. Le boitier traverse l'enveloppe extérieure du réservoir et communique avec l'espace inter-paroi Une bouteille de gaz inerte sous pression est montée sur le boîtier, par exemple par vissage, du côté extérieur au réservoir. La bouteille de gaz inerte est refermée par une membrane étanche et fusible. Par exemple, la bouteille contient de l'argon et/ou de l'hélium et/ou de l'azote ou tout autre gaz ou mélange équivalent à une pression comprise de préférence entre 5 et 700 bar. De préférence, une partie du fluide sous pression dans le réservoir de gaz inerte (typiquement 2 à 4% volumique) est de l'hélium afin de pouvoir détecter une fuite 2 de la membrane par exemple par spectrométrie pendant le cycle de production du réservoir

L'extrémité du boîtier faisant saillie dans l'espace inter-paroi comporte un orifice apte à permettre la communication entre l'intérieur du boîtier et l'espace inter-paroi.

Le boîtier contient un bouchon étanche au vide et mobile relativement à un siège formé à l'intérieur du boîtier. Une première face du bouchon est soumise à la dépression (pression basse Pin, par exemple inférieure à 10⁻² mbar) régnant au sein de l'espace inter-paroi tandis qu'une seconde face opposée du bouchon est soumise à la pression à l'extérieur du réservoir (pression atmosphérique Patm).

Le bouchon est sollicité hors de son siège par un ressort (par exemple un ressort de compression). De préférence, le ressort exerce sur le bouchon une force d'intensité sensiblement équivalente à la moitié de la différence de pression entre les deux faces du bouchon ((Patm -pion)/2).

L'étanchéité du siège est réalisée par un ou plusieurs joints toriques (non réprésentés) située dans des gorges sur la face cylindrique du bouchon.

La face du bouchon soumise à la pression atmosphérique Patm comporte un pointeau prévu pour pouvoir coopérer avec la membrane.

De préférence, lorsque le bouchon est sorti de son siège des moyens mécaniques (non représentées) empêchent le retour du bouchon dans son siège (par exemple par des formes conjuguées du bouchon, et du siège).

En cas de rupture du vide au sein de l'espace inter-paroi, la force exercée par la dépression sur le bouchon cesse et l'effort du ressort devient suffisant pour pousser le bouchon hors de son siège. L'extrémité du pointeau vient alors frapper et percer la membrane libérant ainsi le gaz de la bouteille.

Le gaz sous pression de la bouteille rejoint alors l'espace inter-paroi via l'orifice.

Avantageusement, l'espace intérieur du boîtier peut comporter une évacuation vers l'extérieur via une soupape de sécurité évacuant une surpression de gaz inerte. La soupape protège le système en cas de fuite de la membrane.

Bien entendu, l'invention n'est pas limitée à l'exemple de réalisation décrit ci-dessus. Ainsi, en variante ou en combinaison, la purge par gaz inerte de l'espace inter-paroi peut être déclenchée en cas de choc sur le réservoir. La purge peut notamment être déclenchée automatiquement en fonction de la réponse d'un détecteur de choc (accéléromètre notamment) sensible aux contraintes subies par le réservoir. Un tel système peut être analogue aux dispositifs à déclenchement mécanique et/ou pyrotechnique de systèmes de protection par sac gonflable (« Airbag »). Il peut être aussi un moyen mécanique ou magnétique de translation du bouchon ou de mise en vide de la face 4. Par exemple, le système de déclenchement de l'inertage peut être également thermique avec un alliage métallique eutectique permettant l'ouverture de la membrane en cas d'échauffement par exemple lors d'un feu extérieur au système. Les moyens de détection d'un choc du système sont donc de préférence aptes à détecter un « choc thermique ».

On conçoit donc aisément que l'invention, tout en étant de structure simple et peu coûteuse permet une protection efficace des réservoirs cryogéniques en cas d'accident. L'invention permet d'empêcher tout risque de concentration d'oxygène à proximité de la paroi froide de l'enveloppe intérieure par purge de l'inter- paroi avec un excès de gaz inerte provenant d'une source.

L'invention permet ainsi notamment d'utiliser des isolations multicouches comportant une couche réfléchissante non conductrice (et donc en matériau inflammable tel qu'un polymère).

Le gaz inerte envoyé dans l'espace inter paroi en cas de choc se solidifie au contact de la paroi externe froide de l'enveloppe intérieure. Ce gaz inerte solidifié forme alors une couche solide qui isole thermiquement et mécaniquement cette enveloppe. La température de la partie du réservoir soumise à l'air est alors supérieure à la température de liquéfaction de l'air.

Le risque d'enrichissement en oxygène dans des zones comportant des matériaux non compatibles (inflammables) peut ainsi être évité.

## Revendications

1. Procédé de protection d'un réservoir cryogénique, le réservoir comportant deux enveloppes concentriques délimitant entre elles un espace inter-paroi dans lequel règne une pression dite basse, le procédé comportant :
- une étape de détection d'un choc au niveau du réservoir et/ou d'une augmentation de pression au sein de l'espace inter-paroi, **caractérisé en ce qu'**il comporte une étape de génération d'un flux de gaz inerte au sein de l'espace inter-paroi uniquement en cas de détection d'un choc au niveau du réservoir ayant une intensité déterminée et/ou d'une augmentation de pression déterminée au niveau de l'espace inter-paroi.

2. Réservoir cryogénique comportant deux enveloppes concentriques, respectivement intérieure et extérieure, l'enveloppe intérieure étant destinée à contenir un fluide ou un mélange de fluides, les deux enveloppes délimitant entre elles un espace inter-paroi dans lequel règne une pression dite basse, le réservoir comportant un dispositif de protection comprenant des moyens de détection d'un choc et/ou d'une variation de pression, des moyens d'inertage aptes à délivrer un flux de gaz inerte, des moyens de libération coopérant avec les moyens de détection et les moyens d'inertage pour commander la délivrance d'un flux de gaz inerte par les moyens d'inertage, **caractérisé en ce que** les moyens d'inertage sont conformés à délivrer un flux de gaz inerte au sein de l'espace inter-paroi uniquement en cas de choc et/ou de variation de pression d'intensité déterminée, le dispositif de protection comportant un boîtier monté sur l'enveloppe extérieure et communicant avec l'espace inter-paroi, une barrière fusible empêchant un flux de gaz inerte entre les moyens d'inertage et l'espace inter-paroi, les moyens de libération comportant un percuteur soumis d'une part à la pression dans l'espace inter-paroi et, d'autre part, à l'action de moyens de rappel, le percuteur étant apte à se déplacer relativement au boîtier en fonction de la pression dans l'espace inter-paroi et de l'action des moyens de rappel entre une position inactive vis à vis de la barrière fusible et une position active provoquant la rupture de la barrière fusible.

3. Réservoir selon la revendication 2, **caractérisé en ce que** les moyens de détection sont conformés pour détecter un choc thermique pour commander la délivrance d'un flux de gaz inerte par les moyens d'inertage lors d'un choc thermique d'une intensité déterminée.

4. Réservoir selon la revendication 2 ou 3, **caractérisé en ce que** les moyens d'inertage comprennent une réserve de gaz inerte sous pression.

5. Réservoir selon l'une quelconque des revendications 2 à 4, **caractérisé en ce que** les moyens de libération comportent un système de type fusible ou amovible apte à libérer un passage entre les moyens d'inertage et l'espace inter-paroi.

6. Réservoir selon l'une quelconque des revendications 2 à 5, **caractérisé en ce qu'**il comporte des moyens formant soupape de sécurité vers l'atmosphère prévus pour évacuer vers l'atmosphère une partie du flux de gaz inerte délivré par les moyens d'inertage dans le cas d'une surpression déterminée.

7. Réservoir selon l'une quelconque des revendications 2 à 6, **caractérisé en ce que** le réservoir a une capacité inférieure à deux mille litres et de préférence inférieure à 500 litres.

8. Réservoir selon l'une quelconque des revendications 2 à 7, **caractérisé en ce que** les moyens de libération et/ou de détection sont dimensionnés de façon à commander la délivrance d'un flux de gaz inerte lorsque l'espace inter-paroi subit une augmentation de pression de l'ordre de la moitié de la différence de pression entre d'une part la pression (Patm) à l'extérieur du réservoir et, d'autre part, la pression dite de travail (Pin) au sein de l'espace inter-paroi.

9. Réservoir selon l'une quelconque des revendications 2 à 8, **caractérisé en ce que** les moyens d'inertage comprennent de l'hélium pour permettre la détection d'une éventuelle fuite.

## Claims

1. Method of protecting a cryogenic tank, the tank comprising two concentric casings between them delimiting an inter-wall space in which a so-called low pressure obtains, the method comprising:
- a step of detecting an impact or shock with the tank and/or an increase in pressure inside the inter-wall space, **characterized in that** it comprises a step of generating a flow of inert gas inside the inter-wall space only if an impact or shock of determined intensity with the tank and/or a determined increase in pressure at the inter-wall space is/are detected.

2. Cryogenic tank comprising two concentric casings these being respectively an inner casing and an outer casing, the inner casing being intended to contain a fluid or mixture of fluids, the two casings between them delimiting an inter-wall space in which a so-called low pressure obtains, the tank comprising a protection device comprising means of detecting an impact or shock and/or a pressure variation, inerting means capable of delivering a flow of inert gas, release means collaborating with the detection means and the inerting means to command the delivery of a flow of inert gas by the inerting means, **characterized in that** the inerting means are designed to deliver a flow of inert gas inside the inter-wall space only in the event of an impact or shock and/or a pressure variation of determined intensity, the protection device comprising a box mounted on the outer casing and communicating with the inter-wall space, a rupturable barrier preventing a flow of inert gas between the inerting means and the inter-wall space, the release means comprising a striker subjected, on the one hand, to the pressure in the inter-wall space and, on the other hand, to the action of return means, the striker being capable of moving relative to the box as a function of the pressure in the inter-wall space and of the action of the return means between a position that is inactive with respect to the rupturable barrier and an active position that causes the rupturable barrier to rupture.

3. Tank according to Claim 2, **characterized in that** the detection means are designed to detect a thermal shock in order to command the delivery of a flow of inert gas by the inerting means in the event of a thermal shock of determined intensity.

4. Tank according to Claim 2 or 3, **characterized in that** the inerting means comprise a reserve of pressurized inert gas.

5. Tank according to any one of Claims 2 to 4, **characterized in that** the release means comprise a system of the rupturable or removable type capable of opening a passage between the inerting means and the inter-wall space.

6. Tank according to any one of Claims 2 to 5, **characterized in that** it comprises means forming a safety valve venting to the atmosphere and designed to dump to the atmosphere a fraction of the flow of inert gas delivered by the inerting means if a determined overpressure is reached.

7. Tank according to any one of Claims 2 to 6, **characterized in that** the tank has a capacity of less than two thousand litres and preferably of less than 500 litres.

8. Tank according to any one of Claims 2 to 7, **characterized in that** the release means and/or the detection means are dimensioned in such a way as to command the delivery of a flow of inert gas when the inter-wall space experiences a pressure increase of the order of half the pressure difference between, on the one hand, the pressure (Patm) outside the tank and, on the other hand, the so-called working pressure (Pin) inside the inter-wall space.

9. Tank according to any one of Claims 2 to 8, **characterized in that** the inerting means comprise helium so as to allow any leak to be detected.

## Patentansprüche

1. Verfahren zum Schutz eines Kryospeichers, wobei der Speicher zwei konzentrische Verkleidungen umfasst, die zwischen sich einen Zwischenwandraum abgrenzen, in dem ein so genannter Niederdruck herrscht, wobei das Verfahren Folgendes umfasst:
- einen Schritt des Erfassens eines Schocks am Speicher und/oder eines Anstiegs des Drucks im Inneren des Zwischenwandraums, **dadurch gekennzeichnet, dass** er einen Schritt des Erzeugens eines Inertgasstroms im Inneren des Zwischenwandraums nur im Fall des Erfassens eines Schocks am Speicher mit einer bestimmten Stärke und/oder eines bestimmten Anstiegs des Drucks am Zwischenwandraum umfasst.

2. Kryospeicher, der zwei konzentrische Verkleidungen, jeweils eine innere und eine äußere, umfasst, wobei die innere Verkleidung dazu bestimmt ist, ein Fluid oder ein Gemisch von Fluiden zu enthalten, die zwei Verkleidungen zwischen sich einen Zwischenwandraum abgrenzen, in dem ein so genannter Niederdruck herrscht, der Speicher eine Schutzvorrichtung umfasst, die Mittel zum Erfassen eines Schocks und/oder einer Druckschwankung, Inertisierungsmittel, die einen Inertgasstrom abgeben können, und Freigabemittel, die zur Steuerung der Abgabe eines Inertgasstroms durch die Inertisierungsmittel mit den Erfassungsmitteln und den Inertisierungsmitteln zusammenarbeiten, umfasst, **dadurch gekennzeichnet, dass** die Inertisierungsmittel dazu angepasst sind, einen Inertgasstrom im Inneren des Zwischenwandraums nur im Fall eines Schocks und/oder einer Druckschwankung von bestimmter Stärke abzugeben, die Schutzvorrichtung ein Gehäuse, das auf der äußeren Verkleidung angebracht ist und mit dem Zwischenwandraum in Verbindung steht, und eine zerreißbare Barriere, die einen Inertgasstrom zwischen den Inertisierungsmitteln und dem Zwischenwandraum verhindert, umfasst, wobei die Freigabemittel eine Schlagvorrichtung umfassen, die einerseits dem Druck in dem Zwischenwandraum und andererseits der Aktion von Rückstellmitteln ausgesetzt wird, wobei die Schlagvorrichtung sich in Bezug auf das Gehäuse in Abhängigkeit von dem Druck in dem Zwischenwandraum und der Aktion der Rückstellmittel zwischen einer inaktiven Stellung gegenüber der zerreißbaren Barriere und einer aktiven Stellung, die das Reißen der zerreißbaren Barriere bewirkt, bewegen kann.

3. Speicher nach Anspruch 2, **dadurch gekennzeichnet, dass** die Erfassungsmittel dazu angepasst sind, einen Wärmeschock zu erfassen, um die Abgabe eines Inertgasstroms durch die Inertisierungsmittel bei einem Wärmeschock mit einer bestimmten Stärke zu steuern.

4. Speicher nach Anspruch 2 oder 3, **dadurch gekennzeichnet, dass** die Inertisierungsmittel einen Vorrat von druckbeaufschlagtem Inertgas umfassen.

5. Speicher nach einem der Ansprüche 2 bis 4, **dadurch gekennzeichnet, dass** die Freigabemittel ein zerreißbares oder herausnehmbares System umfassen, das einen Durchgang zwischen den Inertisierungsmitteln und dem Zwischenwandraum freigeben kann.

6. Speicher nach einem der Ansprüche 2 bis 5, **dadurch gekennzeichnet, dass** er Mittel umfasst, die ein Sicherheitsventil gegenüber der Atmosphäre bilden, das zum Ableiten eines Teils des Inertgasstroms, der von den Inertisierungsmitteln abgegeben wird, in die Atmosphäre im Fall eines bestimmten Überdrucks vorgesehen ist.

7. Speicher nach einem der Ansprüche 2 bis 6, **dadurch gekennzeichnet, dass** der Speicher ein Fassungsvermögen von weniger als zweitausend Liter und vorzugsweise weniger als 500 Liter aufweist.

8. Speicher nach einem der Ansprüche 2 bis 7, **dadurch gekennzeichnet, dass** die Freigabe- und/oder Erfassungsmittel derart dimensioniert sind, dass sie die Abgabe eines Inertgasstroms steuern, wenn der Zwischenwandraum einem Anstieg des Drucks in der Größenordnung von der Hälfte der Druckdifferenz zwischen einerseits dem Druck (Patm) am Äußeren des Speichers und andererseits dem so genannten Ausgangsdruck (Pin) im Inneren des Zwischenwandraums ausgesetzt wird.

9. Speicher nach einem der Ansprüche 2 bis 8, **dadurch gekennzeichnet, dass** die Inertisierungsmittel Helium umfassen, um die Erfassung eines eventuellen Lecks zu ermöglichen.
